# EUROPEAN PATENT SPECIFICATION

(11) **EP 0 385 449 B1**
(45) Date of publication and mention of the grant of the patent: **15.09.1993**
(21) Application number: 90103925.5
(22) Date of filing: 28.02.1990
(51) Int. Cl.: G09G 5/06

(54) **Color liquid crystal display control apparatus**
Ansteuervorrichtung für farbige Flüssigkristallanzeigen
Appareil de commande pour affichage en couleurs à cristal liquide

(30) Priority: 28.02.1989 JP 47266/89
(43) Date of publication of application: 05.09.1990
(73) Proprietor: KABUSHIKI KAISHA TOSHIBA, Kawasaki-shi, Kanagawa-ken 210 (JP)
(72) Inventor: Uchikoga, Hiroshi, c/o Intel. Prop. Div., Minato-ku, Tokyo 105 (JP)
(74) Representative: Lehn, Werner, Dipl.-Ing.

(56) References cited:
- DE-A- 3 514 821
- US-A- 4 766 430

## Description

The present invention relates to a color liquid crystal display control apparatus suitable for a personal computer which includes a color liquid crystal display.

Various personal computers have been developed with the advancement of microcomputers. In addition, a lap-top type personal computer which is compact, lightweight, and portable has been used in place of a conventional desk-top type personal computer.

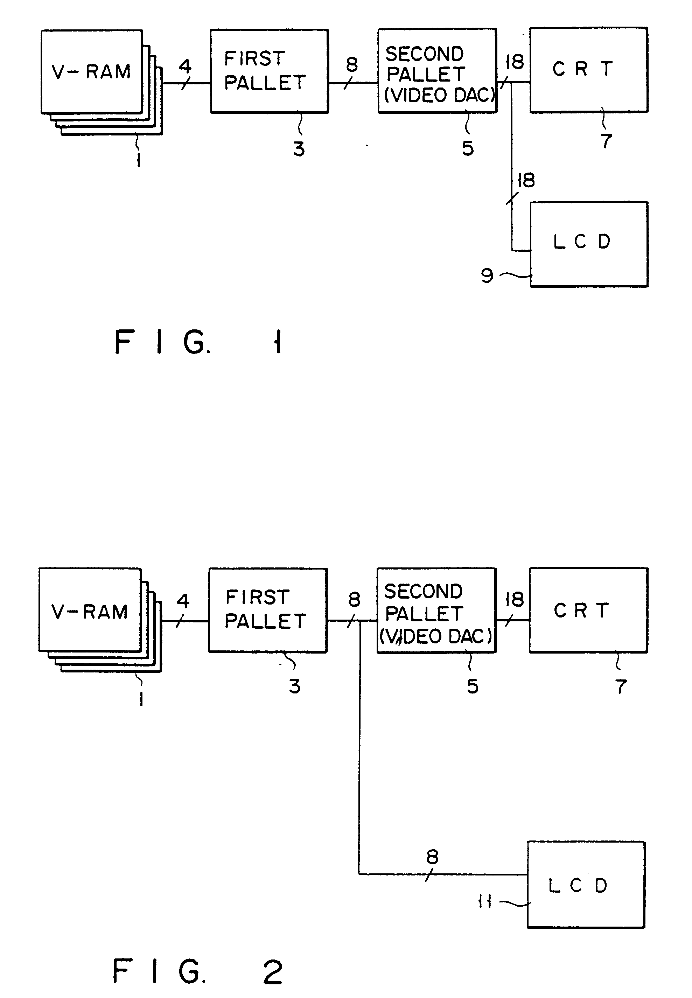

On the other hand, a cathode ray tube (CRT) has been conventionally and widely used as a display. Therefore, various application programs for a CRT display have been developed. In order to effectively utilize such software resources, therefore, a demand has arisen for using a color liquid crystal display as a main display, and connecting a CRT display to the main display as an optional unit, thus separately using the displays of two types in accordance with application programs. A schematic arrangement of a display control apparatus used in this way is shown in Figs. 1 and 2.

Referring to Figs. 1 and 2, video data to be displayed is set in a video RAM (V-RAM) 1 by a CPU (not shown). A first pallet 3 has a 16 × 8-bit configuration, and performs conversion into 256 color data using 4-bit display data output from the V-RAM 1 as an address. A second pallet (video DAC) 5 outputs 256K (262,144) color data using the 256 color data output from the first pallet 3 as an address. A color CRT display 7 and a color liquid crystal display (LCD) 9 are connected to the output terminal of the second pallet 5. In this case, the LCD 9 is a liquid crystal display which can display 256K colors.

In the arrangement shown in Fig. 2, a color liquid crystal display (LCD) 11 is connected to the output terminal of the first pallet 3. In this case, the LCD 11 is a liquid crystal display which can display 256 colors.

In the arrangements shown in Figs. 1 and 2, the LCD 9 or 11 requires a control mechanism which can display 256K (262,144) or 256 colors. However, the maximum number of colors which can be simultaneously displayed, in practice, is generally 16. More specifically, 16 colors are selected from 256 or 256K colors, and the selected colors are simultaneously displayed on the screen. In view of this point, if the above-mentioned LCD which is capable of simultaneously displaying 256 or 256K colors is employed, there is the problem of manufacturing technique (for example, in a compact, lightweight computer such as a lap-top type, space for a control mechanism is limited, and it is difficult to use such an LCD). In addition, cost may be undesirably increased.

It is an object of the present invention to provide a color liquid crystal display control apparatus for displaying an application program for a color CRT display, by performing color display corresponding to each color data with respect to a color CRT display, and using limited display colors while reflecting display colors on the color CRT display with respect to a color liquid crystal display.

In order to achieve the above object, according to the present invention, there is provided a color liquid crystal display control apparatus comprising: first pallet means for converting display data designated by software into color display data; second pallet means for performing conversion into color display data for a cathode ray tube (CRT) on the basis of the color display data converted by the first pallet means; and third pallet means for performing conversion into color data for a color liquid crystal display to display a specific number of color data on the color liquid crystal display on the basis of the color display data converted by the first pallet means.

According to the present invention, a liquid crystal display pallet is arranged to convert 256 color display data into 16 color display data for a color liquid crystal display. In addition, when the contents of the CRT display pallet are updated, the contents of the liquid crystal display pallet are automatically updated. As a result, an application program for the CRT display can be displayed using the color liquid crystal display. In addition, a cost-effective display system can be constructed.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

Other objects and features of the present invention will be apparent from the following description taken in connection with the accompanied drawings in which:

The accompanying drawings, which are incorporated in and constitute a part of the specification, illustrate a presently preferred embodiment of the invention and, together with the general description given above and the detailed description of the preferred embodiment given below, serve to explain the principles of the invention.
Figs. 1 and 2 are schematic block diagrams showing an arrangement achieved when a color liquid crystal display control apparatus which can simultaneously display 256K or 256 colors is connected;
Fig. 3 is a block diagram showing a color liquid crystal display control apparatus according to an embodiment of the present invention;
Fig. 4 is a view showing the contents of first, second, and third pallets shown in Fig. 3;
Fig. 5 is a block diagram showing a mechanism for automatically updating the third pallet upon updating of the second pallet; and
Fig. 6 is a block diagram showing a detailed arrangement of the block diagram shown in Fig. 3.

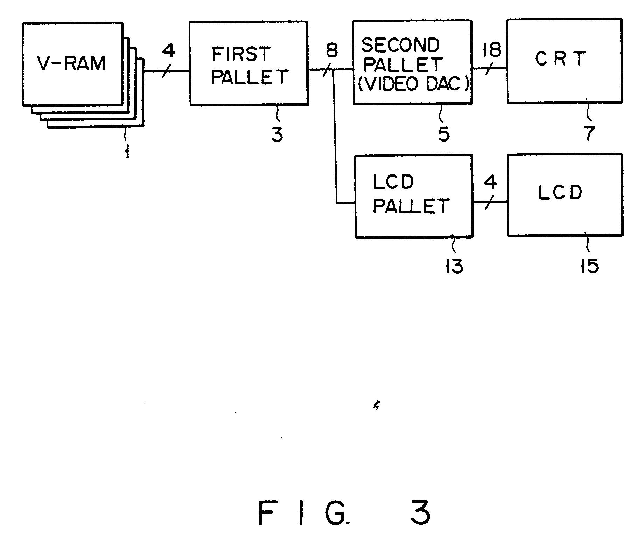

Fig. 3 is a schematic block diagram showing an embodiment of the present invention. As shown in Fig. 3, according to the present invention, a color liquid crystal display pallet (LCD pallet) 13 is connected to the output terminal of a first pallet 3, and a color liquid crystal display (LCD) 15 is connected to the output terminal of the LCD pallet 13. The LCD pallet 13 has a 256 × 4-bit configuration. The pallet 13 selects 16 color data from 256 color data output from the first pallet 3 to output the selected color data to the LCD 15.

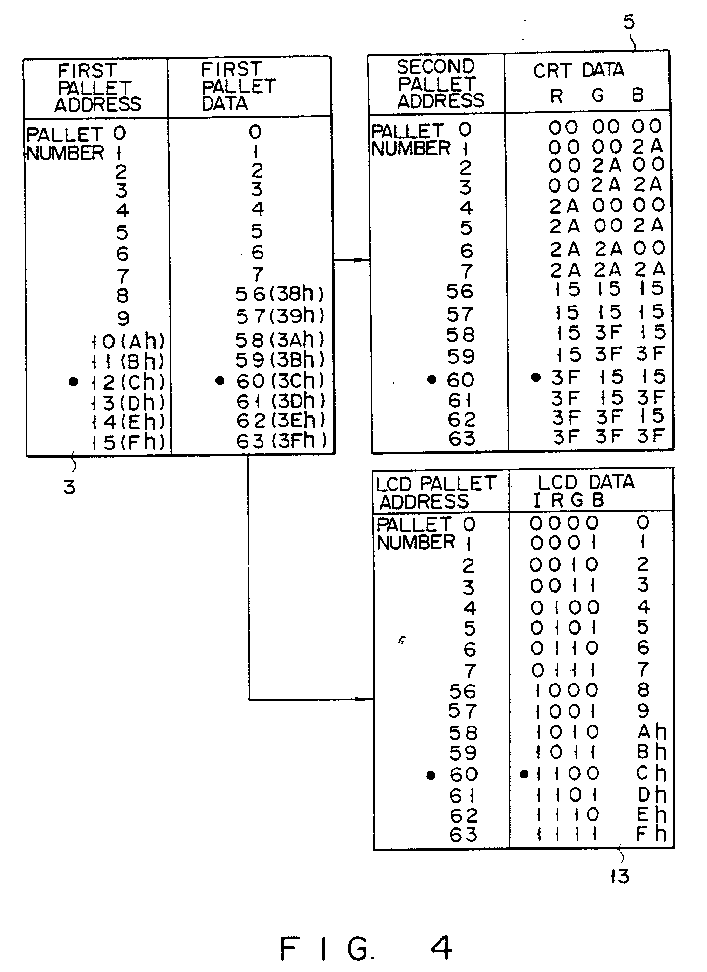

Fig. 4 shows an example of the contents of the first, second, and LCD pallets 3, 5, and 13 shown in Fig. 3. The first pallet 3 stores pallet data "0" to "63" ("0"(hexadecimal, to be referred to as h hereinafter) to "3F"(h)) in correspondence with 16 pallet numbers (input addresses) "0" to "15". Note that the content of the first pallet 3 shown in Fig. 4 shows one pattern example, and various patterns are stored in practice in order to output 256 color data in correspondence with 16 pallet numbers.

The second pallet 5 similarly stores CRT data (R, G, and B data) in correspondence with second pallet numbers (addresses). The content of the second pallet shown in Fig. 4 is an example of a plurality of table patterns. 262,144 such patterns are stored, and the corresponding color data of 262,144 colors is output in accordance with 256 color data supplied from the first pallet 3.

In addition, the LCD pallet 13 stores pallet numbers and LCD data (R, G, B, and Intensity data) in order to output 16 color data with respect to 256 color data supplied from the first pallet. The pallet 13 shown in Fig. 4 shows some stored pallet numbers and corresponding LCD data. Note that "h" represents "hexadecimal" in Fig. 4.

An operation will be described hereinafter on the basis of the data example of the pallets shown in Fig. 4. Assume that 4-bit data "C"(h) representing red of 16 colors, i.e., "1100", (represented by a black dot in Fig. 4) is written in a V-RAM 1 from a CPU (not shown). When the "C"(h) data is input from the V-RAM 1 as an address, the first pallet 3 outputs first pallet data "60" ("3C"(h)) corresponding to "C"(h) to the second pallet 5. The second pallet 5 acquires CRT data (R = "3F"(h), G = "15"(h), and B = "15"(h)) corresponding to "60" serving as an address. A digital/analog converter (D/A converter) of the second pallet 5 converts the data into analog data to output the converted analog data to a CRT 7. As a result, the CRT 7 displays the corresponding colors of 262,144 colors.

On the other hand, the LCD pallet 13 receives "60" ("3C"(h)) from the first pallet 3 as an address to output "1100" ("C"(h)) to the LCD 15 as LCD data. As a result, the LCD 15 displays the corresponding color data of the 16 colors. Note that although the contents of the LCD pallet are not exactly the same as the color data displayed on the CRT display, substantially the same color data is displayed on the LCD 15.

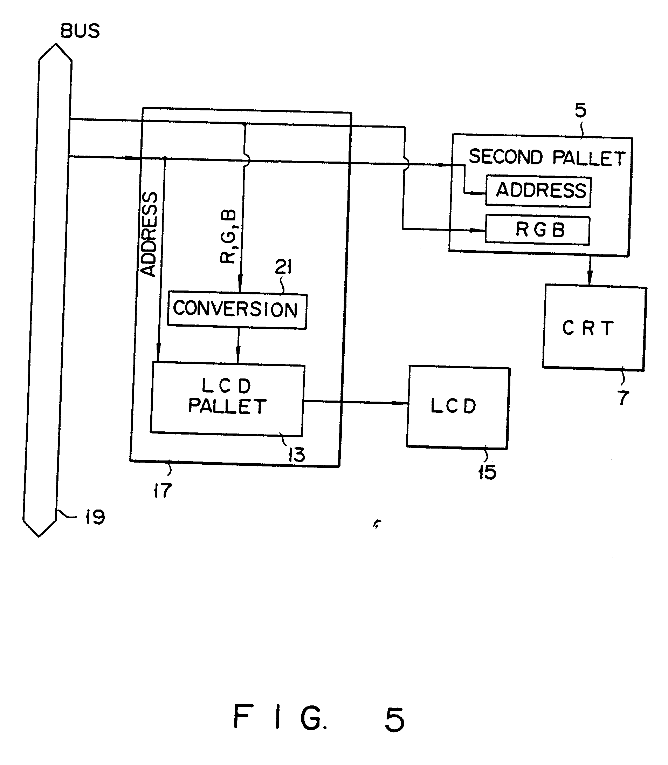

Fig. 5 shows a hardware arrangement to achieve the correspondence between RGB data displayed on the CRT display unit and R, G, and B data displayed on the color liquid crystal display. In this embodiment, when the contents of the first and second pallets 3 and 5 are updated, the contents of the LCD pallet are automatically updated. An LCD pallet conversion mechanism 17 constituted by a gate array is connected to a system bus 19. When the CPU updates the contents of the second pallet 5, the LCD pallet conversion mechanism 17 monitors an address (pallet number) and R, G, and B data in real time to supply the address to the LCD pallet 13, and to supply the R, G, and B data to a conversion circuit 21. The conversion circuit 21 comprises, e.g., a decoder. The conversion circuit 21 converts the R, G, and B data for the CRT into those for the LCD based on a predetermined logic. This conversion logic is as follows.

Referring to Fig. 4, if R, G, and B data of the second pallet are "2A"(h) or more, the corresponding R, G, and B bits of the LCD pallet 13 are set to be "1". If R, G, or B data of the second pallet 5 is smaller than "2A"(h), the corresponding R, G, or B bit of the LCD pallet 13 is set to be "0". If none of the R, G, and B bits are set to be "0"(h), the I (intensity) bit is set to be "1". Only when all of R, G, and B are "2A"(h), the I bit is set to be "0". Even if updating of the second pallet data (CRT pallet data) is designated in an application program for a CRT display, the above-mentioned conversion allows automatic updating of the contents of the LCD pallet data. Therefore, the application program for the CRT display can also be executed using the color liquid crystal display.

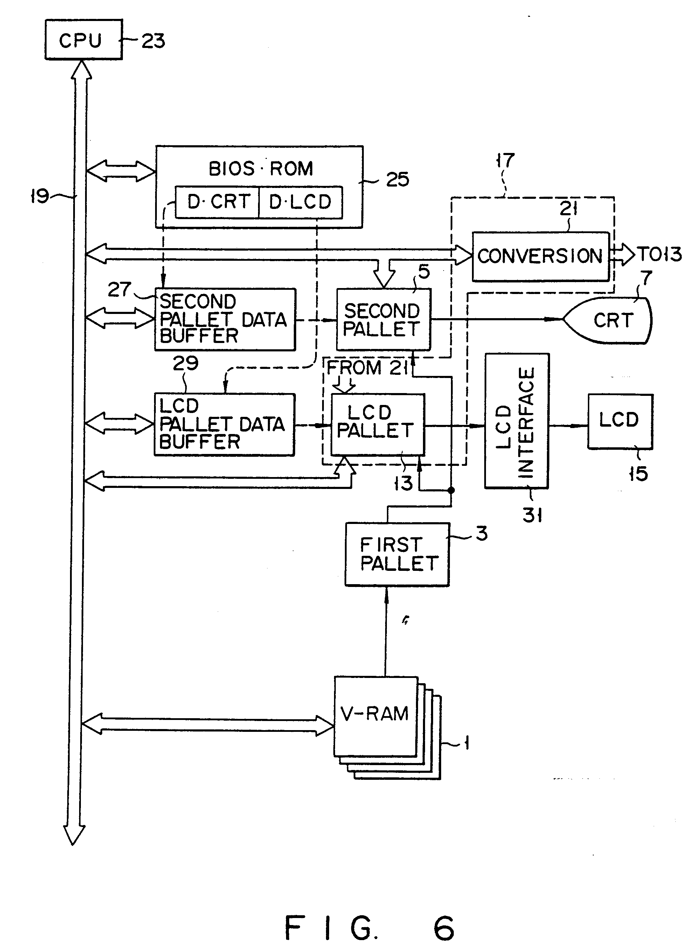

Fig. 6 is a block diagram showing a detailed arrangement of the present invention. The same reference numerals in Fig. 6 denote the same parts as in Figs. 3 and 5. A CPU 23 is connected to the system bus 19. For example, a 16- or 32-bit one-chip microcomputer can be used as the CPU 23. A second pallet data buffer 27 and an LCD pallet data buffer 29 are connected to the system bus 19. The second pallet data buffer 27 temporarily stores pallet data of the color CRT 7. In addition, the LCD pallet data buffer 29 temporarily stores pallet data for the LCD 15.

A BIOS·ROM 25 stores initial values (default values) to be respectively set in the second pallet data buffer 27 and the LCD pallet data buffer 29. Note that an operation of the arrangement shown in Fig. 6 is the same as that described above with reference to Figs. 3 and 5.

Additional advantages and modifications will readily occur to those skilled in the art. Therefore, the invention in its broader aspects is not limited to the specific details, representative devices shown and described. Accordingly, various modifications may be made without departing from the scope of the general inventive concept as defined by the appended claims.

## Claims

1. A color liquid crystal display control apparatus in a personal computer to which a cathode ray tube (CRT) unit can be arbitrarily connected and which has a color liquid crystal display as a standard equipment, comprising:
first pallet means (3) for converting display data designated by software into color display data;
second pallet means (5) for performing conversion into color display data for said cathode ray tube (CRT) unit on the basis of the color display data converted by said first pallet means; and
third pallet means (13) for performing conversion into color data for said color liquid crystal display to display a specific number of color data on said color liquid crystal display on the basis of the color display data converted by said first pallet means.

2. An apparatus according to claim 1, characterized by further comprising:
means (23, 25) for updating contents of said second pallet means; and
means (21) for updating contents of said third pallet means upon updating of the contents of said second pallet means.

3. An apparatus according to claim 1, characterized in that said means for updating the contents of said third pallet means comprises means for monitoring updating of the contents of said second pallet means.

4. An apparatus according to claim 1, characterized in that said third pallet means and said means for updating the contents of said third pallet means upon updating of the contents of said second pallet means comprise a one-chip high-integration semiconductor element.

5. An apparatus according to claim 1, characterized in that said third pallet means converts color display data from said first pallet means into color display data having colors of a number smaller than that of said second pallet means.

## Patentansprüche

1. Farb-Flüssigkeitskristall-Anzeigesteuervorrichtung in einem Personalcomputer, mit dem eine Kathodenstrahlröhren-(CRT)-Einheit beliebig verbunden werden kann und welcher eine Farb-Flüssigkeitskristall-Anzeige als Standardausrüstung hat mit:
- einer ersten Paletteneinrichtung (3) zum Umwandeln von Anzeigedaten, welche durch Software bestimmt werden, in Farb-Anzeigedaten;
- einer zweiten Paletteneinrichtung (5) zum Durchführen einer Umwandlung in Farb-Anzeigedaten für die Kathodenstrahlröhren-(CRT)-Einheit auf der Basis der durch die erste Paletteneinrichtung umgewandelten Farb-Anzeigedaten ; und
- einer dritten Paletteneinrichtung (13) zum Durchführen einer Umwandlung in Farbdaten für die Farb-Flüssigkeitskristall-Anzeige, um eine spezielle Anzahl von Farbdaten auf der Farb-Flüssigkeitskristall-Anzeige auf der Basis der durch die ersten Paletteneinrichtung umgewandelten Farb-Anzeigedaten anzuzeigen.

2. Vorrichtung nach Anspruch 1,
**gekennzeichnet** durch
- eine Einrichtung (23, 25) zum Auffrischen des Inhalts der zweiten Paletteneinrichtung; und
- eine Einrichtung (21) zum Auffrischen des Inhalts der dritten Paletteneinrichtung beim Auffrischen des Inhalts der zweiten Paletteneinrichtung.

3. Vorrichtung nach Anspruch 1,
dadurch **gekennzeichnet**, daß
die Einrichtung zum Auffrischen des Inhalts der dritten Paletteneinrichtung eine Einrichtung zum Anzeigen des Auffrischens des Inhalts der zweiten Paletteneinrichtung umfaßt.

4. Vorrichtung nach Anspruch 1,
dadurch **gekennzeichnet**, daß
die dritte Paletteneinrichtung und die Einrichtung zum Auffrischen des Inhalts der dritten Paletteneinrichtung beim Auffrischen des Inhalts der zweiten Paletteneinrichtung ein Einzelchip-Hochintegrations-Halbleiterelement umfaßt.

5. Vorrichtung nach Anspruch 1,
dadurch **gekennzeichnet**, daß
die dritte Paletteneinrichtung Farb-Anzeigedaten von der ersten Paletteneinrichtung in Farb-Anzeigedaten mit Farben einer Anzahl kleiner als die der zweiten Paletteneinrichtung umwandelt.

## Revendications

1. Dispositif de commande d'affichage en couleurs à cristaux liquides dans un ordinateur personnel auquel peut être connectée arbitrairement une unité à tube à rayons cathodiques (TRC) et qui comporte un dispositif d'affichage en couleurs à cristaux liquides comme équipement standard, comprenant :
un premier moyen à palette (3) pour convertir des données d'affichage indiquées par logiciel en données d'affichage en couleurs ;
un deuxième moyen à palette (5) pour exécuter une conversion en données d'affichage en couleurs pour ladite unité à tube à rayons cathodiques (TRC) selon les données d'affichage en couleurs converties par ledit premier moyen à palette ; et,
un troisième moyen à palette (13) pour exécuter une conversion en données de couleur pour ledit dispositif d'affichage en couleurs à cristaux liquides afin de visualiser un nombre spécifique de données de couleur sur ledit dispositif d'affichage en couleurs à cristaux liquides selon les données d'affichage en couleurs converties par ledit premier moyen à palette.

2. Dispositif selon la revendication 1, caractérisé en ce qu'il comprend en outre :
un moyen (23, 25) pour mettre à jour les contenus dudit deuxième moyen à palette ; et,
un moyen (21) pour mettre à jour les contenus dudit troisième moyen à palette lors de la mise à jour des contenus dudit deuxième moyen à palette.

3. Dispositif selon la revendication 1, caractérisé en ce que ledit moyen pour mettre à jour les contenus dudit troisième moyen à palette comprend un moyen pour contrôler la mise à jour des contenus dudit deuxième moyen à palette.

4. Dispositif selon la revendication 1, caractérisé en ce que ledit troisième moyen à palette et ledit moyen pour mettre à jour Les contenus dudit troisième moyen à palette lors de la mise à jour des contenus dudit deuxième moyen à palette sont constitués par un élément monopuce à semiconducteurs à haute intégration.

5. Dispositif selon la revendication 1, caractérisé en ce que ledit troisième moyen à palette convertit les données d'affichage en couleurs provenant dudit premier moyen à palette en données d'affichage en couleurs comportant les couleurs d'un nombre inférieur à celui dudit deuxième moyen à palette.
